Europäisches Patentamt

**European Patent Office**

Office européen des brevets

(11) Publication number: **0 151 349 B1**

## EUROPEAN PATENT SPECIFICATION

(45) Date of publication of patent specification: **14.08.91**　(51) Int. Cl.⁵: **F16J 15/32**

(21) Application number: **84308880.8**

(22) Date of filing: **19.12.84**

(54) **Composite helix seal.**

(30) Priority: **19.12.83 US 563149**

(43) Date of publication of application:
**14.08.85 Bulletin 85/33**

(45) Publication of the grant of the patent:
**14.08.91 Bulletin 91/33**

(84) Designated Contracting States:
**AT CH DE FR GB IT LI NL SE**

(56) References cited:
**EP-A- 0 122 319
DE-A- 2 746 594
US-A- 2 804 325
US-A- 4 132 421
US-A- 4 183 892**

**AUTOMOTIVE ENGINEER, vol. 9, no. 2, April-May 1984, page 18, Southend-on-Sea, GB; "New requirements for crankshaft seals"**

(73) Proprietor: **CHICAGO RAWHIDE MANUFAC-TURING COMPANY
900 North State Street
Elgin Illinois 60120(US)**

(72) Inventor: **Peisker, Glenn
24160 N. Flintcreek Drive
Barrington Illinois 60010(US)**
Inventor: **Christiansen, Keith
1214 Lincoln Avenue
Fox River Grove Illinois 60021(US)**
Inventor: **Jaime, Gil
922 Locust Street
West Dundee, Illinois 60018(US)**

(74) Representative: **Shipton, Gordon Owen et al
W.P. THOMPSON & CO. Coopers Building
Church Street
Liverpool L1 3AB(GB)**

Rank Xerox (UK) Business Services

## Description

The present invention relates to improved shaft seals constructed of specialty materials and adapted for a wide variety of applications.

Specialty materials having low friction and favourable wear capabilities, for example, fluorocarbon materials such as high polymers of tetrafluoroethylene (TFE), are known as potentially advantageous for sealing applications, but such materials at the time also have known drawbacks.

Such resinous materials per se are of a plastic character; they are subject to cold flow; and can be nicked or scratched during installation. Obtaining and maintaining proper fit clearances and forces with associated machine parts was difficult. Filled or composite TFE and like materials are now known which include a matrix of TFE resin but include inert fillers (e.g. carbon black or glass fibres); these are better for certain applications.

TFE, being non-elastic, is poor for static seals. Many TFE seals thus incorporate helices (e.g. screw threads or vanes), to create hydrodynamic action. Fluid can be returned to the seal cavity by a "pumping" action when there is relative motion between the seal and the shaft.

TFE is not easily bonded to a casing, and in some cases, to rubber. Thus, manufacturing and assembling TFE seals and developing correct sealing lip or surface profiles is a serious problem not yet entirely overcome. However, TFE and related low friction materials are still of interest, as their advantages have become more widely known.

By means of the present invention there is provided a novel seal which includes fluorocarbon resin which includes a formed resin ring element adapted to serve both as the primary lip and as an auxiliary or excluder lip. At least a portion of the lip surface contains hydrodynamic formations consisting of, for example, grooved indented or debossed surfaces rather than upstanding or protruding vanes or ribs; the resinous seal ring as a whole is in the form of a generally frusto-conical ring having an intermediate portion thereof bonded by an annular collar unit to an associated casing, having one radially spaced apart portion acting as the primary lip surface and having a different diameter than the seal diameter at the bond area, and further having an auxiliary lip of a third diameter adapted to engage another relatively movable surface to form an excluder lip. Preferably, the seal also comprises an associated or accessory casing forming a wear sleeve or seal engagement surface so that the primary seal lip can be protected after manufacture and prior to and during installation.

By means of the present invention there is also provided a seal unit having a casing with a mounting portion and a seal element attachment portion, a resinous contoured seal ring element made of a fluorocarbon resin material and having outer, inner, and intermediate diameters, and inner and outer surface portions with at least one of the innermost and outermost diameter portions being adapted to form a primary seal with an associated machine element and with an intermediate portion of one surface being bonded by an annular elastomeric collar extending between it and the bonding portion of the associated casing.

By means of the present invention there is also provided a novel seal-making method which includes cutting a cylindrical tubular fluorocarbon resin billet so as to form a tapered or frusto-conical seal ring, placing this ring and a seal casing in a mould, and forming an annular elastomeric bonding collar extending between one surface of the seal element and the seal casing unit. The method may also include forming one or more hydrodynamic surface formations of one surface of the seal ring element by a coining operation while the ring is supported in a contoured mould unit.

According to the present invention there is provided a composite fluid seal unit adapted to be positioned with respect to a first machine element for forming a fluid tight seal with a relatively movable second machine element in the region between the first and second machine elements, said seal unit comprising, in combination, a casing element of generally annular form, having a mounting portion adapted to be received in fixed relation with the first machine element and a bonding portion adapted to receive an elastomeric element bonded thereto in fluid tight relation, said seal unit also including a resinous fluorocarbon primary seal ring unit, said seal ring unit being, in its unstressed condition, of tapering annular form and thin cross-section and being defined by closely spaced apart, generally parallel, radially inner and outer seal ring surfaces, with one of said inner and outer surfaces being an active surface having a primary seal band portion formed thereon, said seal band being adapted to engage a part of said second machine element in substantially fluid tight dynamic relation, and the other of said inner and outer surfaces being a reverse surface having one portion thereof disposed in use in generally facing relation to the sealed region, as apparent from e.g. US-A-4.183.892. According to the invention said composite fluid seal unit is characterised in that said reverse surface further including a circumferential band portion acting as a bonding surface, and an elastomeric flexible positioning collar unit having one portion bonded to said casing and another bonding portion bonded to said band portion on said primary ring, and a principal body portion extending between said bonded portions so as to positively but resiliently locate said primary seal ring within said casing, whereby said primary seal ring of tapering annular form is defined by reduced and enlarged diameter end portions and said active surface having primary seal band position formed thereon is situated adjacent one of said end portions.

According to the present invention there is also provided such a composite seal unit wherein said seal unit is positioned in a sealed region between a first machine element and a rotatable portion of a second machine member element forming a fluid tight seal.

According to a particular embodiment of the present invention there is provided a method of manufacturing a composite seal assembly, said method including the steps of cutting from a cylindrical billet of a resinous fluorocarbon material at least one primary sealing ring of generally frusto-conical form in its unstressed condition, said ring thereby including first and second principal surface portions, each being inclined with respect to the axis of said billet, one of such surfaces being a first surface directed generally radially inwardly and in a first axial direction, and the second surface being closely spaced apart from the first surface and being directed generally radially outwardly and in an opposite axial direction, supporting the ring thus formed against movement, disposing a relatively rigid annular casing unit adjacent said ring with at least a portion of said ring lying within a central opening in said casing unit, aligning said casing so as to have one margin thereof in generally radially aligned relation with a portion of said resin ring, and bonding said casing unit to said seal ring without substantial deformation of said seal ring by moulding an elastomeric collar of thin cross-section such that said collar extends between and bonds portions of said second surface of said ring and a part of said casing unit to each other in fluid-tight relation.

According to another particular embodiment of the present invention there is provided a mould assembly for manufacturing a fluid seal, said mould assembly including a first, relatively fixed mould member having surfaces thereon defining at least in part the shape of an article to be manufactured, said surfaces including a radially innermost, generally frusto-conical surface having radially inner and outer margins, with said radially innermost margin being adapted to engage one surface of a resinous seal ring placed therein, at least one surface also defining one portion of a cavity for forming an annular collar, and casing support means in the form of a generally radially extending additional annular surface, a second, intermediate mould member having generally annular surfaces directed oppositely to said additional annular surface and in overlying relation to a casing received in said mould, said intermediate member also including at least one inlet for fluent elastomeric material and further including surfaces defining an additional portion of said collar-forming cavity, and a third mould member having a generally frusto-conical surface portion adapted to engage a margin of said seal ring on a face thereon opposite the face engaged by said innermost margin of said fixed mould member, said third mould member having coining land and groove formations thereon for cold forming hydrodynamic grooves in said resinous ring when said mould is in the fully closed position thereof, said mould also permitting, in the closed position thereof, flow of fluent elastomer to fill said collar-forming cavity and bond said casing to said ring unit.

According to a further embodiment of the present invention said method of manufacturing a seal comprising, when using the above mould, cutting from a cylindrical billet of resinous fluorocarbon material a seal ring of thin cross-section, said seal ring being of frusto-conical configuration in its relaxed condition, placing said ring in a first mould part having frusto-conical surfaces registering with, and in supporting relation to, one surface of said seal ring, coining hydrodynamic formations in the surface of said seal ring opposite the surface supported by said first mould part by movement of a coining die into contact with said opposite surface under a high force, positioning said ring within an opening in an annular seal casing element, and bonding said ring to said element without substantial deformation of said seal ring by the formation of an elastomeric collar having an inner margin portion bonded to the portion of said ring surface which was supported by said first mould part and another margin bonded to a portion of said seal casing, whereby said ring is firmly but resiliently supported generally centrally of said seal casing by a resilient annular collar, and whereby hydrodynamic formations are formed on a generally radially inwardly directed surface of said seal ring for contact with an associated machine member.

Fig.12 shows a seal installed in position of use with a plurality of associated machine members; and

Fig.13 shows an alternate form of seal of a unitized construction and including a wear sleeve as well as a sealing element.

The seal of the invention may be embodied in different forms, both unitized and non-unitized. The sealing action may result from an outer casing with a ring having a radially inwardly directed compressive load, with the excluder lip acting axially, or in reversed form, with the primary casing on the inside and the sealing lip being urged radially outwardly against companion flange or other sealed surface.

The seal may also, but need not, include an auxiliary, axially acting lip. Herein, "axially inner" means toward the sealed region and "axially outer" means away from the sealed region; "primary" as applied to the lip or seal ring means that which is intended to retain a fluid within the sealed region and "auxiliary" refers to a lip used to exclude contaminants from the area between itself and the vicinity of the primary lip. "Unitized" refers to a seal having an intended wearing surface along which the seal band is situated on an accessory wear sleeve element associated in use with the principal seal assembly. "Secondary" means a seal which is formed between two relatively immovable or non-rotatable surfaces, (e.g., the seal casing and the counterbore).

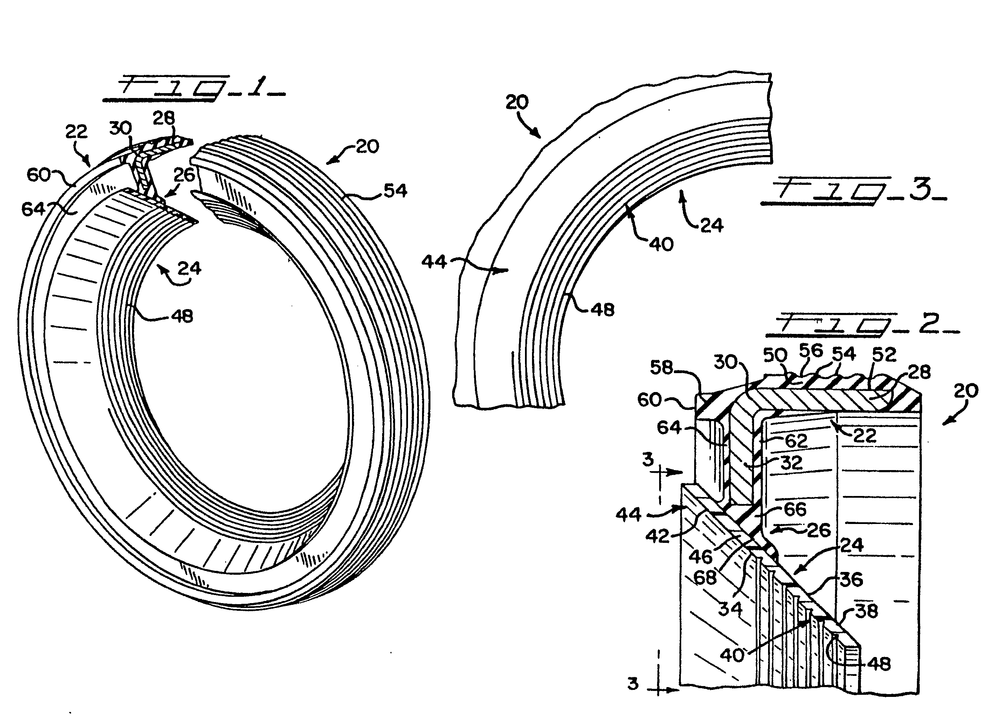

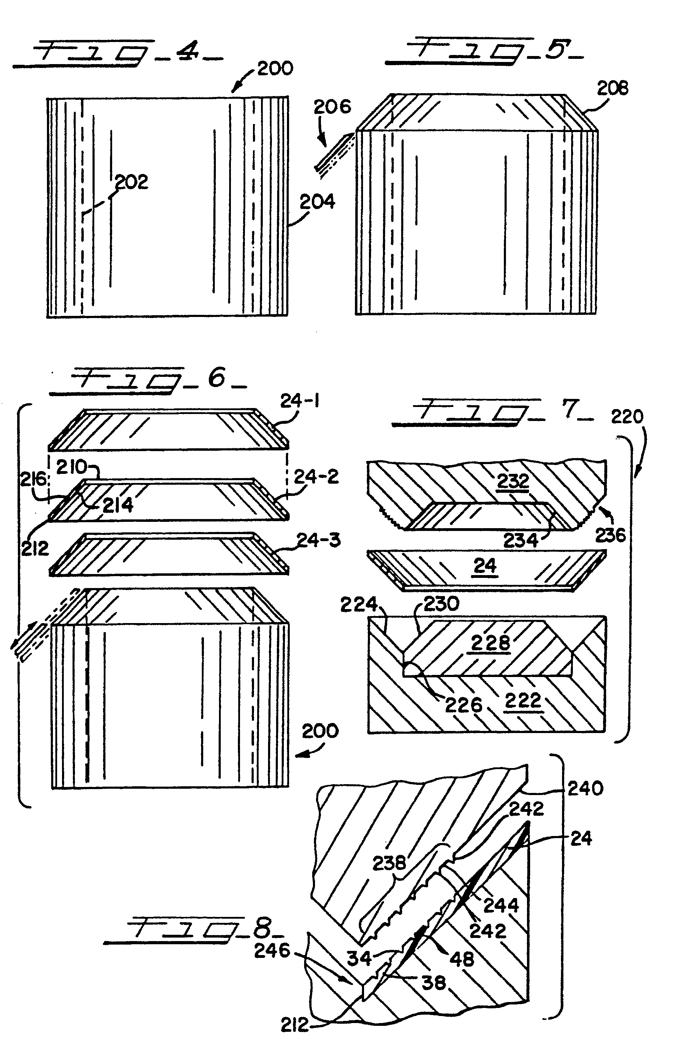

Fig.1 shows the invention to be embodied in a seal unit 20 and to include a casing unit 22, a resinous sealing ring unit 24 which is secured to the portion of the casing 22 by an annular elastomeric bonding and locating collar generally designated 26. Referring now in particular to Fig.2, it is shown that the casing 22 includes an axially extending mounting flange portion 28 joined at a radius portion 30 to a radially extending flange or bonding portion 32. The resin sealing ring 24 is made from a resinous fluorocarbon material such as a high polymer of tetrafluoroethylene and is in the form of a tapered, bevelled or frusto-conical ring of thin cross-section.

The seal ring 24 includes an active surface 34 and a reverse surface 36, and may be subdivided (for purposes of description) into an inner diameter portion 38 on which the primary seal band 40 will be formed (see also Figs. 12 and 13), an outer diameter portion 42 which will form an auxiliary lip generally designated 44, and an intermediate or bonding portion 46.

Fig.2 shows that a single spiral groove 48 or a plurality of like formations 48 are coined, or cut, along the active surface 34 of the inner diameter portion 38 of the ring 24. These grooves 48 are hydrodynamic pumping elements whose construction will be described elsewhere herein.

Fig.2 also shows that a cylindrical elastomeric body 50 is formed on the outer surface 52 of the flange 28, and that this body includes a plurality of ribs 54 giving a contoured character to the outside diameter ("OD") mounting surface 56 of the body 50. The elastomer used to form the body 50 is also used to provide a generally annular bumper element 58 having a flat nose portion 60 and being of generally rectangular cross-section. In use, the nose 60 surface may be used to abut a portion of a sealed mechanism or an associated companion flange as referred to elsewhere herein.

Another element of the seal is the annular collar 26 of elastomeric material used to secure the sealing ring 24 to the casing 22. It includes axially inner and outer bonding body portions 62, 64 of thin cross-section, which are spaced apart by the thickness of the flange 32 and which meet at their inner diameters to form an annular centre section 66 of the collar 26. A portion of the collar web 26 lying inwardly of the centre section 66 is seen to be of increased width and to form an annular mounting pad surface 68 which lies along and is firmly bonded to the intermediate or bonding band portion 46 of the reverse side surface 38 of the resin sealing ring 24.

Fig.12 shows the seal assembly 20 in an installed position of use, in a sealed mechanism 70 which includes a machine member 72 having a counterbore surface 74 which snugly receives the ribs 54 on the outer diameter of the mounting body 50, thus locating the axial flange 28 of the seal casing 22. The counterbore 74 also receives an outer race 76 locating a plurality of tapered roller bearings 78 which also roll along an inner race 80, pressed over the outer diameter surface 82 of a rotary shaft 84.

The installation also includes a spacer 86 pressed over the shaft 84 and providing an end face surface 88 for engagement by the auxiliary lip 44, as will appear. The sealed region 90 is at least partially filled with oil or grease, and has its principal parts exposed to such lubricant in liquid or vapour phase. A primary seal band 40 is formed where the inner diameter portion 38 of the seal ring 24 is slightly deformed or "bell-mouthed" so as to lie closely over, and impart a radial compressive load to the exterior surface 82 of the rotary shaft 84. Here the grooves 48 lie along and face the sealed surface. The primary seal band 40 is formed by contact between the active or inner surface 34 of the ring 24, while the reverse surface 38 is used for bonding and, except for being fluid, gas and vapour impermeable, does not per se form an active sealing surface.

The end surface 88 on the spacer 86 engages or is closely spaced apart from the nose surface 60 on the spacer 58. The auxiliary lip 44 is dimensioned so as to be placed under a slight axial end face load in this installed position, thereby drawing its outer diameter 42 somewhat outwardly and also into a "bell-mouthed" position, enabling it to obtain and maintain a sliding seal fit with the end face surface 88.

Fig.13 shows an alternate form of seal 20a in a mechanism 70a having a sealed region 90a. This seal includes the shaft 84a, the exterior surface 82a and the bearings and races 76-80a, etc. of its counterpart in Fig.12. However, the seal of Fig.13 includes an auxiliary sleeve 92 with an axially extending mounting flange 94 for engaging the seal ring 24, a radius portion 96 and a radially extending combination unitizing flange and auxiliary lip companion flange 98 as well as a small unitizing curl 100. A wear surface 102 lies on the outer surface of the flange 94 while a ribbed elastomeric mounting body 104 is bonded to the inner surface of this flange 94. In use, the body 104 is press fit over the surface 82a during installation of the seal. The nose portion 60a of the spacer 58a provides the same function as its counterpart in Fig.12, except that it engages the inner or wearing surface 106 of the flange 98, as does the auxiliary lip surface 44a formed on the outer diameter 42a of the primary seal ring 24a. The seal assembly 20a is thus a unitized seal.

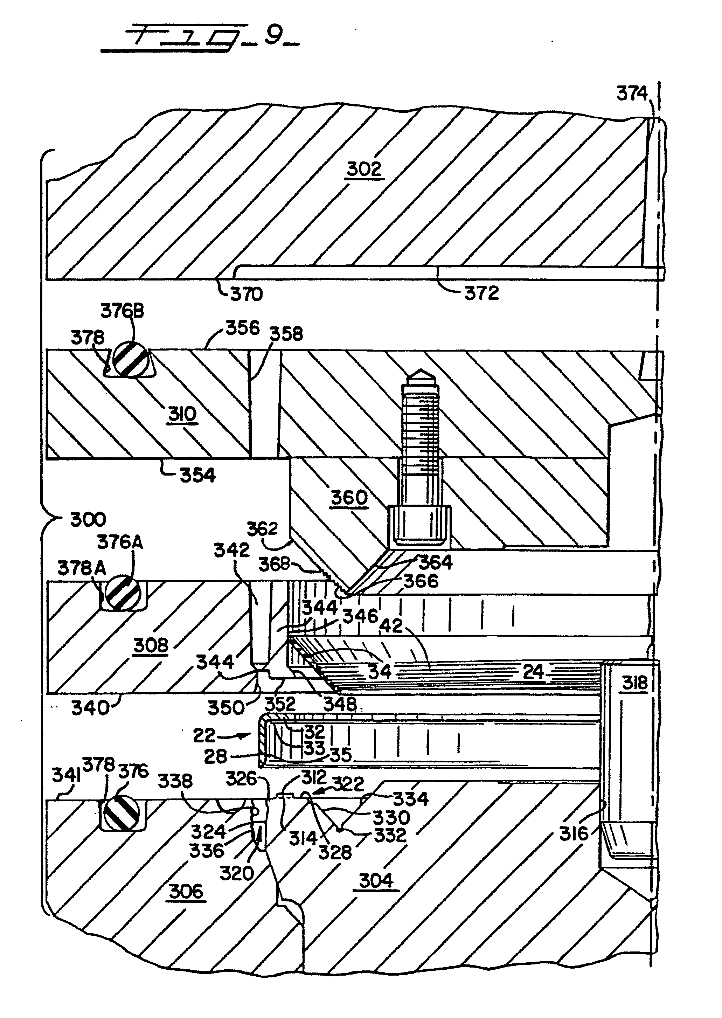

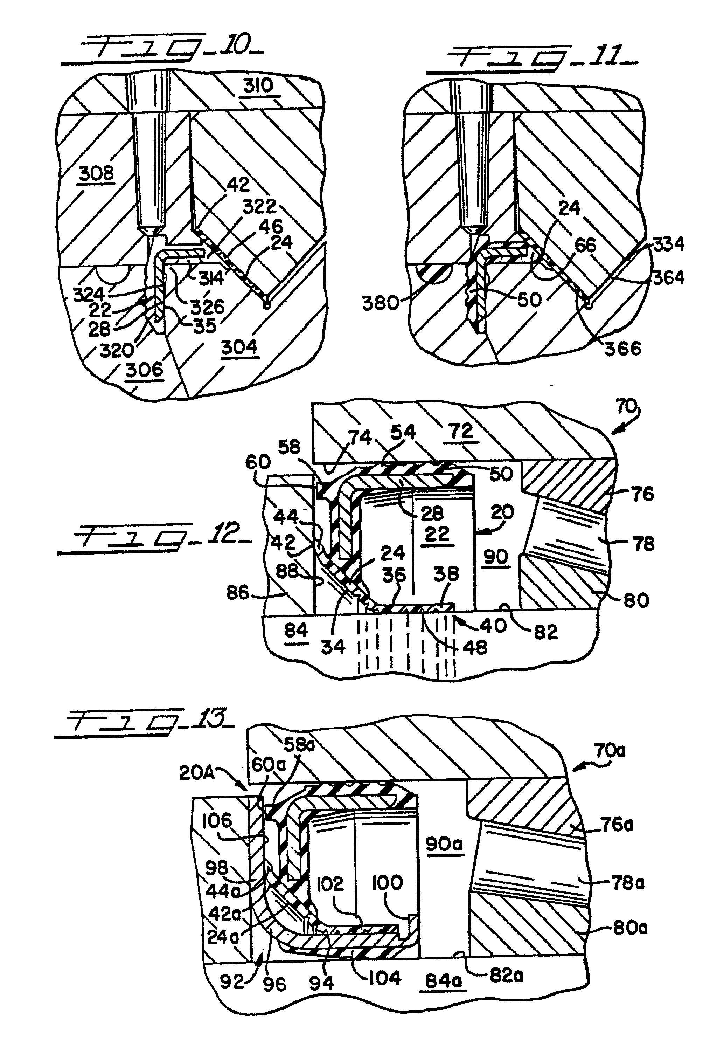

Figs. 4 to 8 show certain steps in the preferred method of forming the seal ring of the invention. Referring to Fig.4, there is shown a cylindrical fluorocarbon billet 200 which is preferably made from a glass fibre filled, high polymer of tetrafluoroethylene (TFE), a tough solid material having a lubricous surface. The billet 200 has inner side walls 202 and outer side walls 204, made to any convenient length by known methods such as sintering.

The sealing rings 24 (Figs. 1 to 3 and 12 to 13) of the invention are made by chucking the billet 204 in a suitable tool and rotating it while a knife 206 is used to cut a tapered edge or bevel 208 on the billet 200. Thereafter, as shown in Fig.6, the knife is moved axially downwardly and the process repeated until a plurality of rings 24-1, 24-2, 24-3, etc. are cut or "skived" from the billet 200. These rings, 24-1 to 24-3, are of the general frusto-conical shape shown, having a cylindrical inner edge 210, a cylindrical outer edge 212, and radially inner and outer face surfaces 214, 216.

Thereafter, one or more hydrodynamic grooves are formed into the seal rings 24 by cutting with a knife, awl or like instrument, or by coining. Fig.7 shows a ring coining die 220, which includes a support fixture 222, having a tapered, upwardly directed conical face 224 and a cavity 226 for supporting a positioning element 228. The element 228 may also include a bevelled surface to aid in centering or otherwise positioning the ring 24. The other element includes a coining die 232 having a relieved inner surface 234 and a contoured end generally designated 236 with (Fig.8) a radially inner land-and-groove portion 238 and a radially outer, flat surface portion 240.

The inner portion 238 includes a plurality of sharpened lands 242 spaced apart from each other by grooves 244. The inner diameter 212 of the ring 24 is sized so as to lie in a notched annular area 246 formed by co-operation between the die parts 222, 228. When the ring forming die 220 is closed under high force or pressure, the lands 242 form grooves in the inner diameter margin or active surface portion 34 lying on the inner diameter 38 of the ring 24.

Figs. 4 to 8 thus show a preferred simple, and effective, method of making and coining frusto-conical rings suitable for use with the invention.

Figs. 9 to 11 show an assembly 300 for moulding completed seals using the preformed casing 22 and a precut but not coined ring 24. The mould assembly 300 includes a top plate 302, an inner core 304, an outer core 306, a sprue plate 308, and a seal ring hold-down plate 310. Fig.9 also shows a drawn or stamped casing generally designated 22 positioned between the cores 304, 306 and the sprue plate 308, with its axial flange 28 extending downwardly and its radial flange 32 being shown to present what will become an axially inwardly directed surface 33 lying downward for support on the end face portions 312 of a plurality of stamping support bosses 314.

The core 304 includes a centre recess 316 for receiving a locating pin or dowel 318 for alignment purposes, and includes portions which help define both the outer and inner seal cavities 320, 322. These include an outermost annular surface 324, surmounted by a locating bead 326. Located radially inwardly of the stamping support bosses 314 are contoured surfaces 328 adapted to form a portion of what will become the web 66 in the finished seal. A tapered or bevelled resin ring support surface 330 is also provided and terminates at its inner edge in an annular groove 332, upwardly and inwardly of which lies a tapered mating or registration surface 334.

The outer core 306 includes a lowermost annular surface 336 above which is a grooved or ribbed surface 338 adapted to form the ribs 54 in the outer diameter of the seal casing 22.

The sprue plate 308 is preferred for injection moulding and includes, in addition to the lower flat surface 340 adapted to lie upon the surface 341 of the core 306, a tapered sprue 342 terminating at an inlet 344. It will be understood that the sprues 342 are tapered passages spaced apart from each other about the periphery of the cavity formed in part by the sprue plate 308, and that radially inwardly thereof is a mould element 344 having a generally cylindrical registration surface 346 below which is a tapered surface 348 having the important function of engaging the outer diameter portion 42 of the seal ring 24. Contoured surfaces, including the surfaces 350 and 352 also define additional portions of the outer and inner mould cavities 320, 322.

The seal ring hold-down element 310, includes opposed flat surfaces 354, 356 enabling it to be stacked with the other elements when the mould is closed. In addition, it includes an upper sprue passage 358 and an annular formation 360 terminating in a pair of bevelled annular surfaces 362, 364. The surface 364 abuts or lies closely spaced apart from its counterpart surface 334, and the surface 362 lies along and engages the active surface 34 of the ring 24 when the mould is closed. A plurality of coining formations 366 are shown as lying along the radially inner margin of the surface 362, for in-mould coining.

The outer margin 368 of the surface 362 is in vertical registry with the support surface 34 for the outer diameter 42 of the ring 24. The mould top plate includes the downwardly directed flat surface 370 adapted to engage the surface 346 on the mould part 310 as well as a plurality of radial grooves 372 standing outwardly from and communicating with the main sprue passage 374, through which fluent, i.e. flowable,elastomeric material passes as rubber is injected during manufacture. A plurality of O-rings 376, 376a, 376b, are shown to be provided in the respective mould sections and each is received within a groove 378, 378a, etc. in a conventional manner to ensure sealing and/or vacuum control when the mould is closed.

Figs. 10 and 11 show the mould 300 with the elements in the closed position and the stamping 22 supported on the bosses 314, and its radially innermost surface 35 lying alongside and being engaged with the mould cavity forming surface 324. The bead 326 serves to centre the stamping 22. With the mould closed, the construction of the cavity 320 forming the ring around the cylinder or body 50 of elastomer around the outermost portion of the flange 28 can be seen, as can the contours of the cavity 322 in which the various web portions 62, 64 and the collar 66 are formed, which elements terminate at their radially innermost portions in the annular mounting or bonding pad 68 which extends around the intermediate bonding band portion 46 of the ring 24 so as to fix it securely in relation to the casing.

Provision of the groove 332, in combination with the pinching action provided between the surfaces 348 and surfaces 368 on the sprue plate 308 and the hold-down plate, respectively, ensure that the ring 24 is held in place properly, and further ensure that "flash" will not flow onto the surface 348, and hence will not lie along the reversed surface portion of the auxiliary lip-forming outer diameter 42 of the seal ring 24.

The mould surface 352 (Figs. 10 and 11) is spaced slightly apart from the upper surface of the flange casing 22; this spacing permits fluent rubber to flow from the sprue inlet 344 into the cavity 322. Customarily, there are also provided hold-down pins or the like (not shown) to bear against the upper surface of the casing and hold it in place during moulding. Being known to those skilled in the art and not forming a part of this invention, these elements are not shown or described in detail. Likewise, the land 314 is discontinuous or has circumferentially spaced apart portions permitting elastomer flow between such portions.

Fig.11 shows the above elements with the mould closed, with the rubber overflow or "dump" areas 380 filled with rubber and with the mounting diameter body 50 and the annular collar neck portion 66 of the rubber as well as the remaining elements being formed as shown in Fig.3.

Another feature of the invention is that the land and groove surface 366 on the radially inner portion of the tapered surface 362 on the hold-down ring 310 also serves to coin the plurality of hydrodynamic grooves 48 in the radially inner diameter margin 38 of the seal casing 24. This is done if the grooves are not preformed by the apparatus of Figs. 7 and 8.

Accordingly, the mould of the type shown may accommodate and centre the casing 22, and with the seal ring 24 inserted therein when the mould is closed, the ring is positioned by the groove 366 and pinched off by the surface 368 so as to remain positioned to accept the high pressure flow of fluent rubber into the cavities 320,322 to form a seal which includes an outer diameter mounting body portion made from an elastomer as well as a mounting or locating collar portion and mounting pad formation which provides excellent locating and good flexibility in use.

The seal of the invention is highly advantageous for several reasons. First, the formation of the primary resinous sealing ring in the manner illustrated enables it to be a preformed frusto-conical tapered or "bell-mouthed" configuration which is ideal for engaging an associated shaft. It achieves this shape in the relaxed or as-formed condition. This not only simplifies assembly, but provides a graduated load extending from the innermost diameter gradually along and to a larger diameter portion of the bevel. The hydrodynamic formations may be, and preferably are, formed as grooves rather than lands as has commonly been done in the past. This allows greatly reduced wear on the active surface of the ring, inasmuch as the hydrodynamic elements or vanes do not extend outwardly from the active surface of the material where they are subjected to wear. The controlled radial compressive load or radially inwardly directed sealing force, particularly with its graduated pressure effect, enables a good static seal to be maintained, as does the formation of the narrow pitch spiral or helix for hydrodynamic purposes. While this narrow pitch or like spiral is not a necessary feature of the invention, it is a pattern which has been particularly successful with this form of seal.

Another feature of the invention is the ability to use a single piece of TFE resin sealing ring or washer to provide an auxiliary or excluder lip seal from the same material. The tapered construction of the primary seal ring as formed permits the auxiliary or excluder lip to be formed on a larger diameter where it can engage an end face surface. This is a preferred form of excluder lip which preferably rides on a surface other than the same shaft which is being sealed by the primary ring. The frusto-conical or tapered construction is ideal from this standpoint.

Another advantage of the invention is that the resin ring may be bonded and located in a highly advantageous manner by the provision of the novel collar which extends between the webs of elastomer extending along the faces of the radial caring flange and the annular band on the reverse or inactive surface of the resin. This collar provides firm but flexible location of the lip as a whole. It provides an excellent bonding surface but it need not undergo significant bending motion leading to premature failure in use. It readily accommodates radial runout and provides a portion of greatly increased flexibility in relation to the modulus of the resin. Accordingly, in a slightly off centred or like shaft which is essentially round but which is not mounted concentrically with the counterbore, the eccentricity or radial runout may be accommodated by the elastomer while the resin ring, which is not inherently as flexible, or at least has a greater modulus, can follow the seal surface without undergoing high rate deflection. The collar may be made of any desired thickness, but preferably is relatively thin. It thus provides good centering action because of its geometry, while still providing a relatively thin cross section. It is believed that the flexible collar which is formed of elastomer and, in effect, intersects the surface of the primary seal ring at a substantial angle is an important novel feature of the invention for the type of locating action it provides.

The seal is ideally adapted to both unitized and nonunitized constructions, and the methods used to make it are highly advantageous. Figs. 9 to 11 show that the seal can be made in a single operation - coining of the hydrodynamic surfaces on the primary ring and moulding both a rubber OD and the bonding collar and pad. The seal design is suitable for incorporating a rubber OD and is also readily suited to the use of a companion flange or unitizing element which may itself have a rubber ID (inside diameter). The seal may be readily adapted to reverse type installations where the seal acts radially outwardly, or wherein the part illustrated as the shaft 84 is stationary and the machine part 72 rotates. In such cases, centrifugal forces may be taken advantage of as a sealing parameter. In use, the seal of the invention has proved extremely advantageous in terms of extended wear, ease of manufacture, outstanding seal performance and particularly, ease of manufacture. It is not necessary to preform the fluorocarbon resin ring by elaborate processes or form it by the use of mandrels and other techniques known to the prior art.

In the above description, the expression "spiral", or "helix" is used to describe the hydrodynamic formations on the active or seal band surface 34 of the primary ring 24 of the seal.

In this connection, it should be understood that a variety of patterns are effective to bring about the return of oil to the sealed cavity upon rotation of the shaft, or, of course, return lubricant or the like to the sealed cavity in the event it is the seal which rotates and the shaft or the like which stands still. In either case, relative motion between the two serves to "pump" the oil, grease, or other sealed fluid back into the sealed region. In the use of fluorocarbon seals, it has generally been found that a screw thread pattern of fine pitch is preferred, and this form of seal is illustrated in Figs. 1 to 3 of the drawings, for example, in these figures, the drawings are intended to illustrate the use of a helix having two or more "starts", that is, two or more points at which one of the grooves 48 intersects the innermost edge portion 210 of the actual seal ring 24. In such case, oil entering any one particular groove along the seal band 40 will be in communication with oil in the sealed region at the point where the "start" occurs, that is, where the groove 48 intersects the axially innermost edge 210 of the seal ring. In some cases, there may be only a single start, as shown or implied in Fig.12, for example, but the number of starts or intersections is not a material part of the invention, such features per se being known to the prior art.

Another form of hydrodynamic formation which has proved successful in use is one wherein the formation comprises a part of a spiral of a greatly differing pitch or taper, and in the oil seal art, such formations are often referred to as "helices", that is, as elements of a helix pattern. These separate elements, sometimes also referred to as "vanes", "ribs", or the like, are illustrated, for example in U.S. Patents Nos. 3,640,542 and 3,790,180.

Still further, other hydrodynamic formations, such as, for example, triangles, sinuous patterns, may also be used, depending on the preference of the designer.

However, a preferred feature of the present invention is that the formation, particularly if it be of the screw thread, spiral, or helix form, be debossed or grooved into the surface of the seal ring, thereby diminishing wear considerably. In other words, when the major wearing surface 40 contacting the shaft or other sealed surface is free from upstanding or embossed formations, extended life in the use of the seal is made possible. If the formations were raised, for example, they would be exposed to premature wear.

**Claims**

1. A composite fluid seal unit (20) adapted to be positioned with respect to a first machine element (72) for forming a fluid tight seal with a relatively movable second machine element (84) in the region between the first and second machine elements, said seal unit comprising, in combination, a casing element (22) of generally annular form, having a mounting portion (28) adapted to be received in fixed relation with the first machine element (72) and a bonding portion (32) adapted to receive an elastomeric element bonded thereto in fluid tight relation, said seal unit also including a resinous fluorocarbon primary seal ring unit (24), said seal ring unit (24) being, in its unstressed condition, of tapering annular form and thin-cross section and being defined by closely spaced apart, generally parallel, radially inner and outer seal ring surfaces (34, 36), with one of said inner and outer surfaces (34, 36) being an active surface having a primary seal band portion (40) formed thereon said seal band (40) being adapted to engage a part of the second machine element (84) in a substantially fluid tight dynamic relation, and the other of said inner and outer surfaces (34, 36) being a reverse surface having one portion thereof disposed in use in generally facing relation to the sealed region, characterised in that said reverse surface further including a circumferential band portion (68) acting as a bonding surface, and an elastomeric flexible positioning collar unit (26) having one portion bonded to said casing (22) and another bonding portion bonded to said band portion (68) on said primary ring, and a principal body portion (66) extending between said bonded portions so as to positively but resiliently locate said primary seal ring (24) within said casing, whereby said primary seal ring (24) of tapering annular form is defined by reduced and enlarged diameter end portions (38, 42) and said active surface having primary seal band position (40) formed thereon is situated adjacent one of such end portions.

2. A composite fluid seal unit as claimed in claim 1, wherein said active surface (34) on said seal ring unit is a radially inwardly directed surface.

3. A composite fluid seal unit as claimed in claim 1 or 2, wherein said resinous fluorocarbon is a polymer of tetrafluoroethylene.

4. A composite fluid seal unit as claimed in claim 1, 2 or 3, wherein said casing element mounting portion (28) includes an axially extending flange and wherein said casing element bonding portion (32) comprises a generally radially extending flange.

5. A composite fluid seal unit as claimed in claim 1, 2, 3 or 4, wherein said tapering annular form of said primary ring (24) is a generally frusto-conical form.

6. A composite fluid seal unit as claimed in any of claims 1 to 5, wherein said primary seal ring unit (24) is formed by cutting a frusto-conical ring of thin cross-section from a cylindrical billet (200) of fluorocarbon material.

7. A composite fluid seal unit as claimed in any of claims 1 to 6, wherein said primary seal ring unit (24) includes, at least on said seal band portion (40) thereof, at least one hydrodynamic formation (48) being adapted, upon relative rotation between said seal band and one of said machine elements, to pump lubricant into said sealed region along the interface between said seal band (40) and a portion of the second machine element (84).

8. A composite fluid seal unit as claimed in any of claims 1 to 7, wherein said primary seal ring unit (24) includes, adjacent its enlarged diameter end, an auxiliary seal band (44) formed on the portion of said active surface (34) opposite said primary seal band (40), said auxiliary seal band (44) being adapted to form an excluder seal in co-operation with a generally radially extending surface (88) of the second machine element (84).

9. A composite fluid seal unit as claimed in any of claims 1 to 8, wherein said primary seal band (40) includes hydrodynamic formations (48) forming a part thereof, said formations being in the form of grooves formed in said seal band.

10. A composite fluid seal unit as claimed in any of claims 1 to 9, wherein said casing element bonding portion (32) is formed on a radial flange of said casing, and includes the inner margins of the axial end faces of said casing and the radially innermost surface of said casing, with said portion of said collar (26) which is bonded to said casing completely covering and being bonded to said margins and innermost surface.

11. A composite fluid seal unit as claimed in any of claims 1 to 10, wherein said bonding surface (68) on said primary seal ring lies on the radially outwardly directed surface (38) of said ring and is disposed generally axially centrally thereof.

12. A composite fluid seal unit as claimed in any of claims 1 to 11, wherein said seal band (40) has formed in the surface thereof a hydrodynamic formation (48) in the form of a spiral groove having a plurality of turns lying within the portion of the seal band which contacts an associated seal member in use.

13. A composite fluid seal unit as claimed in claim 12 wherein said hydrodynamic formation (48) comprises a plurality of spiral grooves, each of said grooves having a lead portion intersecting said end surfaces of seal ring at the axially innermost edge of said seal band.

14. A composite seal unit (20) according to any of claims 1 to 13 wherein said seal unit is positioned in a sealed region between a first machine element (72) and a rotatable portion of a second machine member element (84) forming a fluid tight seal.

15. A method of manufacturing a composite seal assembly as set out in claims 1 to 14, said method including the steps of cutting from a cylindrical billet (200) of a resinous fluorocarbon material at least one primary sealing ring (24) of generally frusto-conical form in its unstressed condition, said ring thereby including first and second principal surface portions (214, 216), each being inclined with respect to the axis of said billet, one of such surfaces being a first surface directed generally radially inwardly (214) and in a first axial direction, and the second surface (216) being closely spaced apart from the first surface and being directed generally radially outwardly and in an opposite axial direction, supporting the ring thus formed against movement, disposing a relatively rigid annular casing unit (22) adjacent said ring with at least a portion of said ring lying within a central opening in said casing unit, aligning said casing so as to have one margin thereof in generally radially aligned relation with a portion of said resin ring, and bonding said casing unit to said seal ring without substantial deformation of said seal ring by moulding an elastomeric collar (26) of thin cross-section such that said collar extends between and bonds portions of said second surface (216) of said ring and a part of said casing unit to each other in fluid-tight relation.

16. A method as claimed in claim 15, wherein said casing unit includes an axially extending mounting surface (28) and a radially extending flange unit (32), with said flange unit having an inner margin on each of its axially inner and outer surfaces, and wherein said portion of said collar (26) bonded to said casing unit (22) is bonded to both of said casing inner margins so as to form a thin web (62, 64) therealong.

17. A method as claimed in claim 15 or 16, wherein the portion of said second ring surface (216) to which said collar (26) is bonded comprises an annular band (68) of frusto-conical configuration lying generally axially centrally of said ring and comprises not more than about half of the surface of said ring.

18. A method as claimed in claim 15, 16 or 17, which also includes the step of forming a cylindrical mounting body of said elastomer on said casing so as to provide a rubber mounting surface thereon.

19. A method as claimed in any of claims 15 to 18, wherein said ring is positioned with one axial end thereof being axially spaced apart from one end surface portion of said casing so as to provide, in use, an excluder lip end portion (44) on said ring, said excluder lip end being adapted to engage an associated machine member to form an auxiliary seal therewith.

20. A mould assembly for manufacturing a fluid seal as set out in claims 1 to 14, said mould assembly including a first, relatively fixed mould member (304) having surfaces thereon defining at least in part the shape of an article to be manufactured, said surfaces including a radially innermost, generally frusto-conical surface (330) having radially inner and outer margins, with said radially innermost margin being adapted to engage one surface of a resinous seal ring (24) placed therein, at least one surface (328) also defining one portion of a cavity (322) for forming an annular collar (66), and casing support means (326) in the form of a generally radially extending additional annular surface, a second, intermediate mould member (308) having generally annular surfaces directed oppositely to said additional annular surface and in overlying relation to a casing (22) received in said mould, said intermediate member also including at least one inlet (344) for fluent elastomeric material and further including surfaces (350, 352) defining an additional portion of said collar-forming cavity, and a third mould member (310) having a generally frusto-conical surface portion (360) adapted to engage a margin of said seal ring on a face thereof opposite the face engaged by said innermost margin of said fixed mould member, said third mould member having coining land and groove formations (366) thereon for cold forming hydrodynamic grooves in said resinous ring when said mould is in the fully closed position thereof, said mould also permitting, in the closed position thereof, flow of fluent elastomer to fill said collar-forming cavity and bond said casing to said ring unit.

21. A mould assembly as claimed in claim 20, which further includes means (306) fixed with respect to said first fixed mould member and which define at least portions of a cavity (320) lying radially outwardly of said casing member (22) and being in communication with said material inlet (344) whereby an outer diameter elastomeric body (50) may be formed on said casing at the same time said collar unit is being formed.

22. A method of manufacturing an oil seal as set out in claims 1 to 14 when using the mould according to claims 20 and 21, said method comprising cutting from a cylindrical billet (200) of resinous fluorocarbon material a seal ring of thin cross-section, said seal ring being of frusto-conical configuration in its relaxed condition, placing said ring in a first mould part (222) having frusto-conical surfaces (224) registering with, and in supporting relation to, one surface of said seal ring (24), coining hydrodynamic formations (48) in the surface of said seal ring opposite the surface supported by said first mould part by movement of a coining die (232) into contact with said opposite surface under a high force, positioning said ring within an opening in an annular seal casing element (22), and bonding said ring to said element without substantial deformation of said seal ring by the formation of an elastomeric collar (66) having an inner margin portion bonded to the portion (68) of said ring surface (36) which was supported by said first mould part and another margin bonded to a portion of said seal casing (22), whereby said ring is firmly but resiliently supported generally centrally of said seal casing by a resilient annular collar, and whereby hydrodynamic formations (48) are formed on a generally radially inwardly directed surface of said seal ring for contact with an associated machine member.

## Revendications

1. Ensemble composé (20) d'étanchéité aux fluides conçu pour être mis en place par rapport à un premier élément (72) de machine pour former un joint étanche aux fluides avec un second élément (84) de machine, relativement mobile, dans la zone comprise entre les premier et second éléments de machine, ledit ensemble d'étanchéité comportant, en combinaison, un élément de bâti (22) de forme globalement annulaire, ayant une partie de montage (28) conçue pour être reçue en position fixe par le premier élément de machine (72) et une partie de liaison (32) conçue pour recevoir un élément élastomérique qui lui est lié dans une disposition étanche aux fluides, ledit ensemble d'étanchéité comprenant aussi un ensemble (24) à bague d'étanchéité principale en résine fluorocarbonée, ledit ensemble à bague d'étanchéité (24) étant, dans son état non contraint, de forme annmulaire conique et de section transversale mince et étant défini par des surfaces radialement intérieure et extérieure, globalement parallèles et faiblement espacées (34, 36) de bague d'étanchéité, une première desdites surfaces intérieure et extérieure (34, 36) étant une surface active sur laquelle est formée une partie de bande d'étanchéité principale (40), ladite bande d'étanchéité (40) étant conçue pour porter contre une partie du second élément (84) de machine dans une disposition dynamique sensiblement étanche aux fluides, et l'autre desdites surfaces intérieure et extérieure (34, 36) étant une surface opposée ayant une partie disposée, lors de l'utilisation, généralement face à la zone fermée de façon étanche, caractérisé en ce que ladite surface opposée comprend en outre une partie de bande circulaire (68) agissant à la manière d'une surface de liaison, et un ensemble à collet élastomérique flexible (26) de positionnement ayant une partie liée audit bâti (22) et une autre partie de liaison liée à ladite partie de bande (68) sur ladite bague principale, et une partie de corps principale (66) s'étendant entre lesdites parties liées afin de positionner fermement, mais élastiquement, ladite bague d'étanchéité principale (24) dans ledit bâti, ladite bague d'étanchéité principale (24) de forme annulaire conique étant définie par des parties extrêmes de diamètres réduit et agrandi (38, 42) et ladite surface active, sur laquelle est formée une partie (40) de bande d'étanchéité principale, étant située à proximité immédiate de l'une de ces parties extrêmes.

2. Ensemble composé d'étanchéité aux fluides selon la revendication 1, dans lequel ladite surface active (34) située sur ledit ensemble à bague d'étanchéité est une surface dirigée radialement vers l'intérieur.

3. Ensemble composé d'étanchéité aux fluides selon la revendication 1 ou 2, dans lequel ladite résine fluorocarbonée est un polymère de tétrafluoréthylène.

4. Ensemble composé d'étanchéité aux fluides selon la revendication 1, 2 ou 3, dans lequel ladite partie (28) de montage de l'élément de bâti comprend un rebord s'étendant axialement, et dans lequel ladite partie de liaison (32) de l'élément de bâti comprend un rebord s'étendant globalement radialement.

5. Ensemble composé d'étanchéité aux fluides selon la revendication 1, 2, 3 ou 4, dans lequel ladite forme annulaire conique de ladite bague principale (24) est une forme globalement tronconique.

6. Ensemble composé d'étanchéité aux fluides selon l'une quelconque des revendications 1 à 5, dans lequel ledit ensemble (24) à bague d'étanchéité principale est formé par coupe d'une bague tronconique de mince section transversale à partir d'une billette cylindrique (200) de matière fluorocarbonée.

7. Ensemble composé d'étanchéité aux fluides selon l'une quelconque des revendications 1 à 6, dans lequel ledit ensemble (24) à bague d'étanchéité principale comprend, au moins sur sa partie (40) de bande d'étanchéité, au moins une formation hydrodynamique (48) conçue, lors d'une rotation relative entre ladite bande d'étanchéité et l'un desdits éléments de machine, pour pomper un lubrifiant vers l'intérieur de ladite zone fermée de façon étanche le long de l'interface entre ladite bande d'étanchéité (40) et une partie du second élément (84) de machine.

8. Ensemble composé d'étanchéité aux fluides selon l'une quelconque des revendications 1 à 7, dans lequel ledit ensemble (24) à bague d'étanchéité principale, comprend, à proximité immédiate de son extrémité de diamètre agrandi, une bande d'étanchéité auxiliaire (44) formée sur la partie de ladite surface active (34) opposée à ladite bande (40) d'étanchéité principale, ladite bande d'étanchéité auxiliaire (44) étant conçue pour former un joint d'exclusion en coopération avec une surface (88), s'étendant à peu près radialement, du second élément (84) de machine.

9. Ensemble composé d'étanchéité aux fluides selon l'une quelconque des revendications 1 à 8, dans lequel ladite bande (40) d'étanchéité principale comprend des formations hydrodynamiques (48) qui en font partie, lesdites formations étant sous la forme de gorges formées dans ladite bande d'étanchéité.

10. Ensemble composé d'étanchéité aux fluides selon l'une quelconque des revendications 1 à 9, dans lequel ladite partie de liaison (32) de l'élément de bâti est formée sur un rebord radial dudit bâti, et comprend les marges intérieures des faces extrêmes axiales dudit bâti et la surface radialement le plus à l'intérieur dudit bâti, ladite partie dudit collet (26), qui est liée audit bâti, recouvrant complètement lesdites marges et ladite surface située le plus à l'intérieur et y étant liée.

11. Ensemble composé d'étanchéité aux fluides selon l'une quelconque des revendications 1 à 10, dans lequel ladite surface de liaison (68) située sur ladite bague d'étanchéité principale s'étend sur la surface (38) dirigée radialement vers l'extérieur de ladite bague et est disposée à peu près en son centre axial.

12. Ensemble composé d'étanchéité aux fluides selon l'une quelconque des revendications 1 à 11, dans lequel ladite bande d'étanchéité (40) présente une formation hydrodynamique (48), formée dans sa surface et ayant la forme d'une gorge hélicoïdale ayant plusieurs spires s'étendant dans la partie de la bande d'étanchéité qui est en contact avec un élément d'étanchéité associé lors de l'utilisation.

13. Ensemble composé d'étanchéité aux fluides selon la revendication 12, dans lequel ladite formation hydrodynamique (48) comprend plusieurs gorges hélicoïdales, chacune desdites gorges ayant une partie d'entrée croisant lesdites surfaces extrêmes de la bague d'étanchéité au bord axialement le plus à l'intérieur de ladite bande d'étanchéité.

14. Ensemble composé (20) d'étanchéité selon l'une quelconque des revendications 1 à 13, dans lequel ledit ensemble d'étanchéité est placé dans une zone fermée de façon étanche entre un premier élément (72) de machine et une partie tournante d'un second élément (84) de machine, formant un joint étanche aux fluides.

15. Procédé de fabrication d'un ensemble composé d'étanchéité selon les revendications 1 à 14, ledit procédé comprenant les étapes qui consistent à découper dans une billette cylindrique (200) en résine fluorocarbonée au moins une bague d'étanchéité principale (24) de forme globalement tronconique dans son état non contraint, ladite bague comprenant ainsi des première et seconde parties de surface principale (214, 216), inclinées chacune par rapport à l'axe de ladite billette, l'une de ces surfaces étant une première surface dirigée globalement radialement vers l'intérieur (214) et dans une première direction axiale, et la seconde surface (216) étant peu espacée de la première surface et étant dirigée globalement radialement vers l'extérieur et dans une direction axiale opposée, à supporter la bague ainsi formée pour s'opposer à tout mouvement, à disposer un ensemble à bâti annulaire relativement rigide (22) à proximité immédiate de ladite bague de manière qu'au moins une partie de ladite bague s'étende dans une ouverture centrale dudit ensemble à bâti, à aligner ledit bâti afin qu'une marge de celui-ci soit dans une disposition alignée à peu près radialement avec une partie de ladite bague en résine, et à lier ledit ensemble à bâti à ladite bague d'étanchéité sans déformation importante de ladite bague d'étanchéité par moulage d'un collet élastomérique (26) de section transversale mince afin que ledit collet s'étende entre, et lie, des parties de ladite seconde surface (216) de ladite bague et une partie dudit ensemble à bâti, entre elles, dans une disposition étanche aux fluides.

16. Procédé selon la revendication 15, dans lequel ledit ensemble à bâti comprend une surface (28) de montage s'étendant axialement et un ensemble à rebord (32) s'étendant radialement, ledit ensemble à rebord ayant une marge intérieure sur chacune de ses surfaces axialement intérieure et extérieure, et dans lequel ladite partie dudit collet (26) liée audit ensemble à bâti (22) est liée aux deux marges intérieures du bâti afin de former un voile mince (62, 64) le long de ces marges.

17. Procédé selon la revendication 15 ou 16, dans lequel la partie de ladite seconde surface (216) de la bague à laquelle ledit collet (26) est lié comprend une bande annulaire (68) de configuration tronconique s'étendant à peu près axialement centralement à ladite bague et ne constitue pas plus d'environ la moitié de la surface de ladite bague.

18. Procédé selon la revendication 15, 16 ou 17, qui comprend aussi l'étape consistant à former un corps de montage cylindrique dudit élastomère sur ledit bâti afin de former sur celui-ci une surface de montage en caoutchouc.

19. Procédé selon l'une quelconque des revendications 15 à 18, dans lequel ladite bague est positionnée de façon qu'une extrémité axiale de celle-ci soit espacée axialement d'une partie de surface extrême dudit bâti afin de former, lors de l'utilisation, une partie d'extrémité à lèvre d'exclusion (44) sur ladite bague, ladite extrémité à lèvre d'exclusion étant conçue pour porter contre un élément de machine associé afin de former avec lui un joint d'étanchéité auxiliaire.

20. Assemblage de moule pour la fabrication d'un joint d'étanchéité aux fluides selon les revendications 1 à 14, ledit assemblage de moule comprenant un premier élément de moule (304) relativement fixe ayant des surfaces définissant au moins en partie la forme d'un article à fabriquer, lesdites surfaces comprenant une surface globalement tronconique (330), située radialement le plus à l'intérieur, ayant des marges radialement intérieure et extérieure, ladite marge radialement le plus à l'intérieur étant conçue pour porter contre une surface d'une bague d'étanchéité (24) en résine placée dans celui-ci, au moins une surface (328) définissant aussi une partie d'une cavité (322) pour former un collet annulaire (66), et un moyen (326) de support de bâti sous la forme d'une surface annulaire supplémentaire s'étendant à peu près radialement, un deuxième élément de moule intermédiaire (308) ayant des surfaces globalement annulaires dirigées de façon à être opposées à ladite surface annulaire supplémentaire et à s'étendre au-dessus d'un bâti (22) reçu dans ledit moule, ledit élément intermédiaire comprenant aussi au moins une entrée (344) pour une matière élastomérique fluide et présentant en outre des surfaces (350, 352) définissant une partie supplémentaire de ladite cavité de formation de collet, et un troisième élément de moule (310) ayant une partie de surface globalement tronconique (360) conçue pour porter contre une marge de ladite bague d'étanchéité sur une face de celle-ci opposée à la face contre laquelle porte ladite marge le plus à l'intérieur dudit élément de moule fixe, ledit troisième élément de moule ayant des formations (366) d'estampage en plateaux et gorges pour former à froid des gorges hydrodynamiques dans ladite bague en résine lorsque ledit moule est dans sa position complètement fermée, ledit moule permettant aussi, dans sa position fermée, un écoulement d'un élastomère fluide pour remplir ladite cavité de formation de collet et lier ledit bâti audit ensemble à bague.

21. Assemblage de moule selon la revendication 20, qui comprend en outre des moyens (306) fixes par rapport audit premier élément fixe de moule et qui définissent au moins des parties d'une cavité (320) s'étendant radialement vers l'extérieur dudit élément de bâti (22) et en communication avec ladite entrée (344) de matière afin qu'un corps élastomérique (50) de diamètre extérieur puisse être formé sur ledit bâti en même temps que ledit ensemble à collet est formé.

22. Procédé de fabrication d'un joint d'étanchéité à l'huile selon les revendications 1 à 14 en utilisant le moule selon les revendications 20 et 21, ledit procédé consistant à découper dans une billette cylindrique (200) en résine fluorocarbonée une bague d'étanchéité de mince section transversale, ladite bague d'étanchéité étant de configuration tronconique dans son état relâché, à placer ladite bague dans une première partie de moule (222) ayant des surfaces tronconiques (224) s'alignant avec une surface de ladite bague d'étanchéité (24) et en relation de support avec elle, à réaliser par estampage des formations hydrodynamiques (48) dans la surface de ladite bague d'étanchéité opposée à la surface supportée par ladite première partie de moule, par un mouvement d'un outil d'estampage (232) jusqu'en contact avec ladite surface opposée sous une force élevée, à positionner ladite bague dans une ouverture située dans un élément de bâti annulaire (22) de joint, et à lier ladite bague audit élément sans déformation notable de ladite bague d'étanchéité par la formation d'un collet élastomérique (66) ayant une partie de marge intérieure liée à la partie (68) de ladite surface (36) de la bague qui était supportée par ladite première partie de moule, et une autre marge liée à une partie dudit bâti (22) du joint d'étanchéité, de manière que ladite bague soit supportée fermement, mais élastiquement, à peu près centralement audit bâti du joint d'étanchéité par un collet annulaire élastique, et de manière que des formations hydrodynamiques (48) soient formées sur une surface dirigée à peu près radialement vers l'intérieur de ladite bague d'étanchéité pour entrer en contact avec un élément de machine associé.

**Patentansprüche**

1. Zusammengesetzte Strömungsmitteldichtungseinheit (20), die zur Anordnung bezüglich eines ersten Maschinenelementes (72) zur Bildung einer strömungsmitteldichten Dichtung eines relativbewegbaren zweiten Maschinenelementes (84) im Bereich zwischen dem ersten und zweiten Maschinenelement ausgebildet ist, bestehend in Kombination aus einem im wesentlichen ringförmigen Gehäuseelement (20) mit einem zur Aufnahme von dem ersten Maschinenelement (72) in fixer Anordnung ausgebildeten Montageabschnitt (28) und einem zur Aufnahme eines strömungsmitteldicht angeklebten Elastomerelementes ausgebildeten Klebeabschnitt (32), welche Dichtungseinheit weiters eine Hauptdichtringeinheit (24) aus Fluorcarbonharz aufweist, die in ihrem entspannten Zustand verjüngte Ringform und dünnen Querschnitt besitzt sowie von in geringem Abstand liegenden, im wesentlichen parallelen, radial innen bzw. außen liegenden Dichtringflächen (34,36) begrenzt ist, wobei eine dieser innen bzw. außen liegenden Flächen (34,36) ein aktive Oberfläche mit einem daran ausgebildeten Hauptdichtbandabschnitt (40), der zur im wesentlichen dynamisch strömungsmitteldichten Anlage an einem Teil des zweiten Maschinenelementes (84) ausgebildet ist, und die andere der innen und außen liegenden Flächen (34,36) eine rückseitige Oberfläche ist, von der ein Abschnitt im Gebrauch dem Dichtbereich im wesentlichen zugekehrt ist, dadurch gekennzeichnet, daß die rückseitige Oberfläche weiters einen als Klebefläche wirkenden umfänglichen Bandabschnitt (68) und eine elastomere, flexible Positionierkrageneinheit (26) aufweist, von der ein Abschnitt an dem Gehäuse (22) und ein weiterer Klebeabschnitt an dem Bandabschnitt (68) des Hauptringes angeklebt sind, und daß sich zwischen den angeklebten Abschnitten ein Hauptkörperabschnitt (66) erstreckt, der den Hauptdichtring (24) zwangsläufig, jedoch elastisch innerhalb des Gehäuses hält, wodurch der Hauptdichtring (24) von verjüngter Ringform von Endabschnitten (38,42) verminderten bzw. vergrößerten Durchmessers begrenzt ist und die aktive Oberfläche mit dem daran ausgebildeten Hauptdichtbandabschnitt (40) nahe einem derartigen Endabschnitt angeordnet ist.

2. Zusammengesetzte Strömungsmitteldichtungseinheit nach Anspruch 1, dadurch gekennzeichnet, daß die aktive Oberfläche (34) der Dichtringeinheit eine radial nach innen gerichtete Oberfläche ist.

3. Zusammengesetzte Strömungsmitteldichtungseinheit nach Anspruch 1 oder 2, dadurch gekennzeichnet, daß das Fluorcarbonharz ein Tetrafluorethylen-Polymer ist.

4. Zusammengesetzte Strömungsmitteldichtungseinheit nach Anspruch 1, 2 oder 3, dadurch gekennzeichnet, daß der Gehäuseelement-Montageabschnitt (28) einen axial verlaufenden Flansch aufweist und daß der Gehäuseelement-Klebeabschnitt (32) einen im wesentlichen radial verlaufenden Flansch aufweist.

5. Zusammengesetzte Strömungsmitteldichtungseinheit nach Anspruch 1, 2, 3 oder 4, dadurch gekennzeichnet, daß die verjüngte Ringform des Hauptringes (24) im wesentlichen eine Kegelstumpfform ist.

6. Zusammengesetzte Strömungsmitteldichtungseinheit nach den Ansprüchen 1 bis 5, dadurch gekennzeichnet, daß die Hauptdichtringeinheit (24) durch Abschneiden eines kegelstumpfförmigen Ringes dünnen Querschnittes von einer zylindrischen Puppe (200) aus Fluorcarbonmaterial gebildet ist.

7. Zusammengesetzte Strömungsmitteldichtungseinheit nach den Ansprüchen 1 bis 6, dadurch gekennzeichnet, daß die Hauptdichtringeinheit (24) zumindest an dem Dichtbandabschnitt (40) zumindest ein hydrodynamisches Gebilde (48) aufweist, das bei Relativdrehung zwischen dem Dichtband und einem der Maschinenelemente zum Pumpen eines Schmiermittels längs der Stoßstelle zwischen dem Dichtband (40) und einem Teil des zweiten Maschinenelementes (84) in den Dichtbereich ausgebildet ist.

8. Zusammengesetzte Strömungsmitteldichtungseinheit nach den Ansprüchen 1 bis 7, dadurch gekennzeichnet, daß die Hauptdichtringeinheit (24) nahe ihrem Ende vergrößerten Durchmessers ein Hilfsdichtband (44) aufweist, das auf dem dem Hauptdichtband (40) gegenüberliegenden Abschnitt der aktiven Oberfläche (34) geformt ist und im Zusammenwirken mit einer im wesentlichen radial verlaufenden Oberfläche (88) des zweiten Maschinenelementes (84) zur Bildung einer Sperrdichtung ausgebildet ist.

9. Zusammengesetzte Strömungsmitteldichtungseinheit nach den Ansprüchen 1 bis 8, dadurch gekennzeichnet, daß das Hauptdichtband (40) einen Teil desselben bildende hydrodynamische Gebilde (48) in Form von in dem Dichtband geformter Rillen aufweist.

10. Zusammengesetzte Strömungsmitteldichtungseinheit nach den Ansprüchen 1 bis 9, dadurch gekennzeichnet, daß der Gehäuseelement-Klebeabschnitt (32) an einem radialen Flansch des Gehäuses ausgebildet ist und die inneren Ränder der axialen Endflächen des Gehäuses sowie die radial innersten Flächen des Gehäuses besitzt, wobei der an dem Gehäuse angeklebte Abschnitt des Kragens (26) die Ränder und die innersten Flächen vollständig bedeckt sowie an diesem angeklebt ist.

11. Zusammengesetzte Strömungsmitteldichtungseinheit nach den Ansprüchen 1 bis 10, dadurch gekennzeichnet, daß die Klebefläche (68) des Hauptdichtringesan der radial nach außen gerichteten Ring-Oberfläche (38) liegt und im wesentlichen axial in deren Mitte angeordnet ist.

12. Zusammengesetzte Strömungsmitteldichtungseinheit nach den Ansprüchen 1 bis 11, dadurch gekennzeichnet, daß in der Oberfläche des Dichtbandes (40) ein hydrodynamisches Gebilde (48) in Form einer Spiralrille mit mehreren Windungen geformt ist, die in demjenigen Abschnitt des Dichtbandes liegen, der im Gebrauch ein zugeordnetes Dichtglied berührt.

13. Zusammengesetzte Strömungsmitteldichtungseinheit nach Anspruch 12, dadurch gekennzeichnet, daß das hydrodynamische Gebilde (48) aus mehreren Spiralrillen besteht, von denen jede einen Anfangsabschnitt aufweist, der die Endflächen des Dichtringes am axial innersten Rand des Dichtbandes schneidet.

14. Zusammengesetzte Strömungsmitteldichtungseinheit nach den Ansprüchen 1 bis 13, dadurch gekennzeichnet, daß die Dichtungseinheit in einem abgedichteten Bereich zwischen einem ersten Maschinenelement (72) und einem drehbaren Teil eines zweiten Maschinenelementes (84) angeordnet ist und eine strömungsmitteldichte Dichtung bildet.

15. Verfahren zur Herstellung einer zusammengesetzten Dichtungsbaugruppe nach den Ansprüchen 1 bis 14, bestehend aus den Schritten des Abschneidens wenigstens eines in entspanntem Zustand im wesentlichen kegelstumpfförmigen Hauptdichtringes (24) von einer zylindrischen Puppe (200) aus Fluorcarbonharzmaterial, wodurch der Ring einen ersten und zweiten Oberflächen-Hauptabschnitt (214,216) erhält, von denen jeder bezüglich der Achse der Puppe geneigt ist, eine der Oberflächen eine im wesentlichen radial nach innen sowie in eine erste Axialrichtung gerichtete erste Oberfläche (214) ist und die zweite Oberfläche (216) in geringem Abstand von der ersten Oberfläche angeordnet und im wesentlichen radial nach außen sowie in eine entgegengesetzte Axialrichtung gerichtet ist, des Abstützens des derart gebildeten Ringes gegen Bewegung, des Anordnens einer relativ starren ringförmigen Gehäuseeinheit (22) neben dem Ring, wobei mindestens ein Abschnitt des Ringes innerhalb einer zentralen Öffnung der Gehäuseeinheit liegt, des Ausrichtens des Gehäuses, sodaß ein Rand desselben mit einem Abschnitt des Harzringes im wesentlichen radial ausgerichtet ist, und des Anklebens der Gehäuseeinheit an den Dichtring ohne wesentliche Verformung des Dichtringes durch derartiges Gießen eines elastomeren Kragens (26) von dünnem Querschnitt, daß der Kragen zwischen Abschnitten der zweiten Oberfläche (216) des Ringes und einem Teil der Gehäuseeinheit verläuft und miteinander strömungsmitteldicht verklebt.

16. Verfahren nach Anspruch 15, dadurch gekennzeichnet, daß die Gehäuseeinheit eine axial verlaufende Montagefläche (28) und eine radial verlaufende Flanscheinheit (32) aufweist, wobei die Flanscheinheit an jeder ihrer axial innen und außen liegenden Oberflächen einen Innenrand aufweist, und daß der an die Gehäuseeinheit angeklebte Abschnitt des Kragens (26) unter Bildung je eines dünnen Steges (62,64) an beide Innenränder angeklebt wird.

17. Verfahren nach Anspruch 15 oder 16, dadurch gekennzeichnet, daß der Abschnitt der zweiten Ringoberfläche (216), an welchen der Kragen (26) angeklebt wird, ein ringförmiges Band (68) von kegelstumpfförmiger Gestalt aufweist, das im wesentlichen in der Mitte des Ringes liegt und nicht mehr als etwa die halbe Oberfläche des Ringes besitzt.

18. Verfahren nach Anspruch 15, 16 oder 17, gekennzeichnet durch den Schritt der Bildung eines zylindrischen Montagekörpers aus dem Elastomer an dem Gehäuse zur Schaffung einer Gummimontagefläche.

19. Verfahren nach den Ansprüchen 15 bis 18, dadurch gekennzeichnet, daß der Ring mit seinem einen axialen Ende derart in axialem Abstand von einem Endflächenabschnitt des Gehäuses angeordnet wird, daß im Gebrauch an dem Ring ein Sperrlippenendabschnitt (44) geschaffen wird, der zum Anlegen an ein zugeordnetes Maschinenglied unter Bildung einer Hilfsdichtung ausgebildet ist.

20. Formbaugruppe zur Herstellung einer Strömungsmitteldichtung nach den Ansprüchen 1 bis 14, bestehend aus einem relativ fix montierten ersten Formteil (304) mit Flächen, die zumindest teilweise die Gestalt eines herzustellenden Gegenstandes begrenzen und die eine radial innerste, im wesentlichen kegelstumpfförmige Fläche (330) mit radial innen und außen liegenden Rändern umfassen, wobei der radial innerste Rand zum Anlegen an eine Oberfläche eines darin eingelegten Harz-Dichtringes (24) ausgebildet ist, wobei wenigstens eine Fläche (328) auch einen Abschnitt eines Hohlraumes (322) zur Formung eines ringförmigen Kragens (66) begrenzt, und mit einer Gehäuse-Stützeinrichtung (326) in Form einer im wesentlichen radial verlaufenden zusätzlichen Ringfläche, aus einem zweiten Formzwischenteil (308) mit im wesentlichen ringförmigen Flächen, die der zusätzlichen Ringfläche gegenüberliegen und über einem von der Form aufgenommenen Gehäuse (22) liegen, und mit zumindest einem Einlaß (344) für fließfähiges Elastomermaterial und weiters mit einen zusätzlichen Abschnitt des den Kragen formenden Hohlraumes begrenzenden Flächen (350,352), und aus einem dritten Formteil (310) mit einem im wesentlichen kegelstumpfförmigen Flächenabschnitt (360), der zum Anlegen eines Randes des Dichtringes an eine der vom innersten Rand des fixen Formteiles berührten Fläche gegenüberliegende Fläche ausgebildet ist, und mit geprägten Grat- und Rillengebilden (366) zur Kaltformung hydrodynamischer Rillen in dem Harzring bei vollständig geschlossener Form, die in ihrem geschlossenen Zustand auch den Zustrom des fließfähigen Elastomers zum Ausfüllen des den Kragen formenden Hohlraumes und zum Ankleben des Gehäuses an die Ringeinheit ermöglicht.

21. Formbaugruppe nach Anspruch 20, gekennzeichnet durch eine Einrichtung (306), die bezüglich des fixen ersten Formteiles fix ist und zumindest Abschnitte eines Hohlraumes (320) begrenzt, die radial außerhalb des Gehäusegliedes (22) liegen und mit dem Materialeinlaß (344) in Verbindung stehen, wodurch zur selben Zeit, zu der die Krageneinheit geformt wird, an dem Gehäuse am Außendurchmesser ein Elastomerkörper (50) geformt werden kann.

22. Verfahren zur Herstellung einer Öldichtung nach den Ansprüchen 1 bis 14 bei Verwendung der Form nach Anspruch 20 oder 21, bestehend aus den Schritten des Abschneidens eines in entspanntem Zustand kegelstumpfförmigen Dichtringes mit dünnem Querschnitt von einer zylindrischen Puppe (200) aus Fluorcarbonharzmaterial, des Anordnens des Ringes in einem ersten Formteil (222) mit kegelstumpfförmigen Flächen (224), die mit einer Oberfläche des Dichtringes (24) ausgerichtet sind und dieselbe abstützen, des Prägens hydrodynamischer Gebilde (48) in die der von dem ersten Formteil abgestützten Oberfläche gegenüberliegende Oberfläche durch Bewegen eines Prägestempels (232) mit großer Kraft in Berührung mit der gegenüberliegenden Oberfläche, des Anordnens des Ringes in einer Öffnung in einem ringförmigen Gehäuseelement (22) und des Anklebens des Ringes an das Element ohne wesentliche Verformung des Dichtringes durch die Formung eines elastomeren Kragens (66), wobei ein innerer Randabschnitt des Kragens an denjenigen Abschnitt (68) der Ringoberfläche (36), der vom ersten Formteil abgestützt wurde, und ein weiterer Rand an einen Abschnitt des Dichtungsgehäuses (22) angeklebt werden, wodurch der Ring mittels eines elastischen ringförmigen Kragens im wesentlichen in der Mitte des Dichtungsgehäuses fest, aber elastisch gelagert ist und wodurch an einer im wesentlichen radial nach innen gerichteten Oberfläche des Dichtringes hydrodynamische Gebilde (48) zum Kontakt mit einem zugeordneten Maschinenteil geformt werden.

FIG. 1

FIG. 2

FIG. 3

FIG_4_

200

202

FIG_5_

206

204

208

FIG_6_

24-1

210

216

214

24-2

212

24-3

200

FIG_7_ 220

232

234

236

24

224

230

228

226 222

240

242

24

238

244

242

34

48

246

38

212

FIG_8_

_FIG_9_

FIG_10_

FIG_11_

FIG_12_

FIG_13_